**Europäisches Patentamt**

**European Patent Office**

**Office européen des brevets**

(11) Veröffentlichungsnummer: **0 420 983 A1**

## (12) EUROPÄISCHE PATENTANMELDUNG
### veröffentlicht nach Art. 158 Abs. 3 EPÜ

(21) Anmeldenummer: 89907378.7

(22) Anmeldetag: 14.04.89

(86) Internationale Anmeldenummer:
PCT/SU89/00098

(87) Internationale Veröffentlichungsnummer:
WO 90/13023 (01.11.90 90/25)

(51) Int. Cl.5: **G01N 27/36**

(43) Veröffentlichungstag der Anmeldung:
**10.04.91 Patentblatt 91/15**

(84) Benannte Vertragsstaaten:
**CH DE FR GB LI NL**

(71) Anmelder: **BUBYREVA, Nina, Sergeevna**
**Anadyrsky proezd, 55-40**
**Moscow, 123098(SU)**

Anmelder: **DAMESHEK, Gennady**
**Alexandrovich**
**ul. M.Pirogovskaya, 23-28**
**Moscow, 119435(SU)**

Anmelder: **ZAIDENMAN, Iosif Arnoldovich**
**pr. Mira, 118a-35**
**Moscow, 169164(SU)**

Anmelder: **KRYLOVA, Nadezhda Mikhailovna**
**Nakhimovsky pr. 27-5-621**
**Moscow, 113209(SU)**

Anmelder: **ROZENBLJUM, Natalya Dmitrievna**
**ul. B.Dorogomilovskaya, 14-2-42**
**Moscow, 12059(SU)**

Anmelder: **ZAITSEV, Viktor Mikhailovich**
**ul. Snezhnaya, 11-14**
**Moscow, 129323(SU)**

Anmelder: **RYBKIN, Viktor Fedorovich**
**Fergansky proezd, 9-1-80**
**Moscow, 109505(SU)**

Anmelder: **ROGACHKOVA, Serafima**
**Konstatntimovna**
**ul. Magadanskaya, 8-65**
**Moscow, 129345(US)**

(72) Erfinder: **BUBYREVA, Nina, Sergeevna**
**Anadyrsky proezd, 55-40**
**Moscow, 123098(SU)**
Erfinder: **DAMESHEK, Gennady Alexandrovich**
**ul. M.Pirogovskaya, 23-28**
**Moscow, 119435(SU)**
Erfinder: **ZAIDENMAN, Iosif Arnoldovich**
**pr. Mira, 118a-35**
**Moscow, 169164(SU)**
Erfinder: **KRYLOVA, Nadezhda Mikhailovna**
**Nakhimovsky pr. 27-5-621**
**Moscow, 113209(SU)**
Erfinder: **ROZENBLJUM, Natalya Dmitrievna**
**ul. B.Dorogomilovskaya, 14-2-42**
**Moscow, 12059(SU)**
Erfinder: **ZAITSEV, Viktor Mikhailovich**
**ul. Snezhnaya, 11-14**
**Moscow, 129323(SU)**
Erfinder: **RYBKIN, Viktor Fedorovich**
**Fergansky proezd, 9-1-80**
**Moscow, 109505(SU)**
Erfinder: **ROGACHKOVA, Serafima**
**Konstatntimovna**
**ul. Magadanskaya, 8-65**
**Moscow, 129345(US)**

(74) Vertreter: **Patentanwälte Zellentin & Partner**
**Zweibrückenstrasse 15**
**W-8000 München 2(DE)**

(54) **IONENSELEKTIVE ELEKTRODE MIT EINER FESTPHASE.**

(57) Ionenselektive Festphasenelektroden gehören zu Einrichtungen zur potentiometrischen Analyse der Ionenzusammensetzung flüssiger Medien. Das Elektrodengehäuse ist in Form eines Rohres (1) aus einem dielektrischen Werkstoff ausgebildet, an dessen einem Ende eine ionenempfindliche Glasmembran (2) befestigt ist, die in ihrer Zusammensetzung La und Nd als Zusätze enthält. An der dem Inneren des Rohres (1) zugewandten Oberfläche der Glasmembran (2) ist ein Festphasenkontakt (3) angebracht, der aus einer Oxidverbindung der allgemeinen Formel $M_xLa_yNd_zWO_3$ besteht worin M ein Alkali- bzw. ein Erdkalimetall bedeutet und wobei $0 < X + Y + Z < 1$ ist. Solche Zusammensetzungen der Glasmembran (2) und des Festphasenkontaktes (3) gestatten es unter Bedingungen mehrmaliger Sterilisation mit überhitztem Wasserdampf bei einer Temperatur von bis 143 C°, die Elektrodencharakteristiken dank der Wiederherstellung der Ionenkonzentration von La und Nd bei deren Diffusion aus der Masse der Membran (2) und des Kontaktes (3) in die mit der zu analysierenden angrenzenden Schicht der Membran (2) unverändert zu erhalten.

## IONENSELEKTIVE FESTPHASENELEKTRODE

Technisches Gebiet

Die Erfindung bezieht sich auf Einrichtungen zur potentiometrischen Analyse der Ionenzusammensetzung flüssiger Medien und betrifft insbesondere eine ionenselektive Festphasenelektrode.

Stand der Technik

Ionenselektive Elektroden finden zur Zeit eine weitgehende Anwendung; der Potentialabgriff erfolgt bei ihnen mittels eines Flüssigkeitskontaktes, der sich an der in bezug auf das zu untersuchende Medium inneren Oberfläche einer ionenempfindlichen Glasmembran befindet. Die erwähnten ionenselektiven Elektroden setzen unter Bedingungen mit erhöhten Temperaturen (über 100 ° C) die Potentialstabilität drastisch herab, was auf die Auslaugung des Membranglases durch den Flüssigkeitskontaktstoff zurückzuführen ist. Dabei kommt es zu einer Änderung der Stoffzusammensetzung des Flüssigkeitskontaktes, was eine Änderung des Potentials der im Flüssigkeitskontakt untergebrachten Vergleichselektroden hervorruft.

Der erwähnte Nachteil ist in ionenselektiven Elektroden beseitigt, bei denen der an der ionenempfindlichen Glasmembran liegende Kontakt als Festphasenkontakt ausgeführt ist. Allerdings nimmt auch bei den bekannten ionenselektiven Festphasenelektroden unter Bedingungen mit erhöhten Temperaturen (über 100 C°),beispielsweise bei der Sterilisation mit überhitztem Wasserdampf,die Potentialstabilität ab, insbesondere wegen der Abnahme der chemischen Beständigkeit der ionenempfindlichen Glasmembran. Zur Zeit wird die Erhöhung der chemischen Beständigkeit von ionenempfindlichen Glasmembranen durch Ändern der Zusammensetzung des für die Membranenherstellung verwendeten Elektrodenglases erzielt.

Es ist beispielsweise ein Elektrodenglas bekannt, das zur Herstellung von ionenempfindlichen Glasmembranen für ionenselektive Elektroden (SU, A, 208904) bestimmt ist und in Masse% enthält:

| | |
|---|---|
| $SiO_2$ | 64 bis 71 |
| $Li_2O$ | 20 bis 31 |
| $Nd_2O_3$ | 2 bis 4 |
| $MgO$ | 3 bis 5. |

Es ist ferner ein Elektrodenglas bekannt, das zur Herstellung von ionenempfindlichen Glasmembranen für ionenselektive Elektroden dient (Handbuch für die Glasherstellung, Band 1, S. 774, Staatsverlag für die Literatur über Bau, Architektur und Baustoffe, Moskau, 1963), das in Masse % enthält:

| | |
|---|---|
| $SiO_2$ | 59,5 |
| $Li_2O$ | 12,6 |
| $Cs_2O$ | 8,4 |
| $La_2O_3$ | 19,5. |

Diese Elektrodengläser sind dadurch gekennzeichnet, daß die ionenselektiven Elektroden, die aus diesen Gläsern gefertigte ionenempfindliche Membranen enthalten, nach der Sterilisation ihre Elektrodencharakteristiken ändern; so wird unter anderem eine Potentialdrift verzeichnet, wodurch die Meßgenauigkeit herabgesetzt wird.

Es wurde festgestellt, daß zur Verminderung der Potentialdrift von ionenselektiven Elektroden die Zusammensetzung des Elektrodenglases mindestens zwei Seltenerdmetalle aufweisen soll. So ist beispielsweise ein Elektrodenglas bekannt, das zur Herstellung von ionenempfindlichen Glasmembranen für ionenselektive Elektroden (SU, A, Nr. 614042) bestimmt ist und in Masse% enthält:

$SiO_2$ 50 bis 56,5

$Li_2O$ 10 bis 12

$La_2O_3$ 7,5 bis 9,5

$Cs_2O$ 6,5 bis 8,5

$Nd_2O_3$ 17 bis 19.

Dieses Elektrodenglas erlaubt es,das Potential der ionenselektiven Elektrode zu stabilisieren, die eine Behandlung mit überhitztem Wasserdampf bei einer Temperatur von bis 120 C° während 1,5 h oder bei einer Temperatur von bis 150 C° während 10 min erhalten hat, was praktisch den Sterilisationsbedingungen nicht entspricht.

Es ist eine ionenselektive Festphasenelektrode (SU, A, 935776) bekannt, die ein Gehäuse in Form eines Rohres aus einem dielektrischen Werkstoff enthält, an dessen einem Ende eine ionenempfindliche Glasmembran befestigt ist, an deren dem Rohrinneren zugewandten Oberfläche ein mit einem Stromabführungsdraht ausgestatter Festphasenkontakt angebracht ist.

In dieser ionenselektiven Festphasenelektrode ist die Glasmembran aus Lithium-Silikatglas gefertigt, während der Festphasenkontakt aus einer Mischung besteht, die einen Stoff mit gemischter Elektroden- und Ionenleitung enthält, als welcher eine Oxidbronze der allgemeinen Formel $M_xT_yO_z$ dient, worin M ein Alkali- bzw. Erdalkalimetall, T ein Kation veränderlicher Valenz aus der Gruppe der Übergangsmetalle (W, V, Ta, Ti) bedeutet, wobei $0<X<1$, $0<Y<3$ und die Größe Z die elektrische Neutralität der Verbindung bestimmt.

Der im Festphasenkontakt enthaltene Stoff mit gemischter Elektronen- und Ionenleitung gewährleistet in Kombination mit einer ionenempfindlichen Glasmembran eine hohe Stabilität des Elektrodenpotentials unter Bedingungen mit nicht über 100 C° liegenden Temperaturen, was durch die elektrochemische Umkehrbarkeit der Grenze Glasmembran - Festphasenkontakt dank Dotierung der Bronze mit einen Alkalimetallion erzielt wird, das mit dem Ladungsträgerion in der Glasmembran gleich namig ist. Zur Anwendung der genannten ionenselektiven Elektrode in Reaktoren, in denen Prozesse bei einer Temperatur von über 100 C° ablaufen, und insbesondere bei einer periodischen Sterilisation der Elektroden mit überhitztem Wasserdampf bei einer Temperatur von bis 143 C° während 2 bis 3 h werden in das Elektrodenglas der Membranen Zusätze von Seltenerdmetallen wie La und Nd eingeführt. Die Elektrodencharakteristiken dieser Elektrode, insbesondere das Elektrodenpotential ändern sich nicht bei der Durchführung von bis 10 Sterilisationszyklen. Allerdings besteht eine Lotwendigkeit, ionenselektive Festphasenelektroden zu schaffen, die bis 30 Sterilisationszyklen ohne Abnahme ihrer Elektrodencharakteristiken aushalten können.

Bei einer längeren Sterilisation dieser Elektrode kommt es zu irreversiblen Verlusten an Ionen der Seltenerdmetalle in der Glaszusammensetzung, was zur Verschlechterung der Elektrodencharakteristiken führt: zur Drift des Elektrodenpotentials, Abnahme der Wasserstoff-Kennliniensterilheit, Zunahme des elektrischen Widerstandes.

Das Ziel der Erfindung ist die Schaffung einer ionenselektiven Festphasenelektrode mit Elektrodencharakteristiken, die sich unter Bedingungen mehrmaliger Sterilisationen mit überhitztem Wasserdampf bei einer Temperatur von bis 143 C° nicht ändern.

Das gesetzte Ziel wird dadurch erreicht, daß in einer ionenselektiven Festphasenelektrode das Gehäuse in Form eines Rohres aus einem dielektrischen Werkstoff ausgebildet ist, wobei an einem Rohrende eine ionenempfindliche Glasmembran befestigt ist, die in ihrer Zusammensetzung La und Nd als Zusätze enthält; an der dem Rohrrinnerenzugewandten Oberfläche der ionenempfindlichen Glasmembran ist ein Festphasenkontakt angebracht, der aus einer Oxidverbindung der allgemeinen Formel $M_xLa_yNd_2WO_3$ besteht, worin M ein Alkali- bzw. ein Erd alkalimetall bedeutet und wobei $0<x + y + z<1$ ist; der Festphasenkontakt ist mit einem Stromabführungsdraht versehen.

Offenbarung der Erfindung

Der Erfindung liegt die Aufgabe zugrunde, eine ionenselektive Festphasenelektrode mit solchen Zusammensetzungen der ionenempfindlichen Glasmembran und des Festphasenkontaktes zu schaffen, die es erlauben, die Elektrodencharakteristiken unter Bedingungen mehrmaliger Sterilisationen mit überhitztem Wasserdampf bei einer Temperatur von bis 143 C° unverändert zu erhalten.

Die gestellte Aufgabe wird dadurch gelöst, daß in einer ionenselektiven Festphasenelektrode, die ein Gehäuse in Form eines Rohres aus einem dielektrischen Werkstoff enthält, an dessen einem Ende eine ionenempfindliche Glasmembran befestigt ist, an deren dem Rohrinneren zugewandten Oberfläche ein mit einem Stromabführungsdraht versehener Festphasenkontakt angebracht ist, erfindungsgemäß die Glasmembran in ihrer Zusammensetzung La und Nd als Zusätze enthält, während der Festphasenkontakt aus einer Oxidverbindung der allgemeinen Formel $M_xLa_yNd_zWO_3$ besteht, worin M ein Alkali- bzw. ein Erdalkalimetall bedeutet und wobei $O < x + y + z < 1$ ist.

In der erfindungsgemäßen ionenselektiven Festphasenelektrode gewährleisten die in der Oxidbronze enthaltenen, in die $WO_3$-Struktur als bewegliche Ionen eingelagerten La und Nd eine Ergänzung von Diffusionsverlusten an diesen Metallen in der Glasmembran und halten also die Konstanz deren Zusammensetzung sogar unter Bedingungen mehrmaliger Sterilisationen bei einer Temperatur von bis 143 C° aufrecht. Dabei ändern sich solche Elektrodencharakteristiken wie das Elektrodenreferenzpotential, die Wasserstoff-Kennlinien-Steilheit und der elektrischer Widerstand so wenig, daß der Meßfehler nach der Durchführung von 30 Sterilisationszyklen bei einer Temperatur von bis 143 C° + 0,1 pH nicht übersteigt.

Im folgenden wird die Erfindung durch Beschreibung eines konkreten Ausführungsbeispiels anhand von Beispielen und einer Zeichnung erläutert, in der eine erfindungsgemäße ionenselektive Festphasenelektrode (im teilweisen Längsschnitt) schematisch dargestellt ist.

Die ionenselektive Festphasenelektrode enthält ein Gehäuse in Form eines Rohres 1 aus einem dielektrischen Werkstoff, insbesondere aus Silikatglas. An einem Ende des Rohres 1 ist eine ionenempfindliche Glasmembran 2 befestigt, die in der vorliegenden Ausführungsform eine sphärische Form hat. Die ionenempfindliche Glasmembran 2 ist aus einem Lithium-Silikatglas gefertigt, das in seiner Zusammensetzung La und Nd enthält. Die Zusammensetzung des Lithium-Silikatglases in Masse% ist wie folgt:

| | | |
|---|---|---|
| $SiO_2$ | 50 bis 56,5 | (1) |
| $Li_2O$ | 10 bis 12 | |
| $La_2O_3$ | 7,5 bis 9,5 | |
| $Cs_2O$ | 6,5 bis 8,5 | |
| $Nd_2O_3$ | 17 bis 19 | |

Außer der angeführten Zusammensetzung des Lithium-Silikatglases können auch weitere Glaszusammensetzungen angewendet werden, die La und Nd als Zusätze enthalten.

An der dem Innerendes Rohres 1 zugewandten Oberfläche der ionenempfindlichen Glasmembran 2 ist ein Festphasenkontakt 3 angebracht, der aus einer Oxidverbindung (Bronze) der allgemeinen Formel $M_xLa_yNd_zWO_3$ besteht, worin M ein Alkali- bzw. ein Erdalkalimetall bedeutet und wobei $0 < x + y + z < 1$ ist. Die die Summe der Werte $x + y + Z$ beschränkenden Grenzen hängen damit zusammen, daß die Oxid bronze die Eigenschaften einer hohen Ionen- und Elektronenleitung nur im Zustand einer nicht stöchiometrischen Zusammensetzung besitzt, d.h., wenn man $x + y + + z$ gleich 0 setzt, liegt ein Wolframtrioxid der stöchiometrischen Zusammensetzung vor, das ein Isolator ist; wenn man aber $x + y + z$ gleich 1 setzt, so handelt es sich um ein stöchiometrisches Parawolframat, das ebenfalls einen Isolator komplizierter Zusammensetzung, aber keine Bronze darstellt.

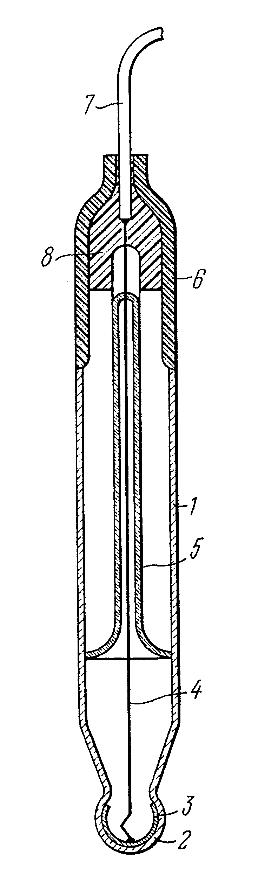

Der Festphasenkontakt 3 in Form einer zähflüssigen Masse wird auf die Innenfläche der ionenempfindlichen Glasmembran 2 aufgetragen und an dieser durch eine Wärmebehandlung fixiert. Der Festphasenkontakt 3 ist mit einem Stromabführungsdraht 4 versehen, der in eine Glaskapillare 5 ebenfalls aus Silikatglas luftdicht eingeschmolzen ist. Auf dem anderen Ende des Rohres 2 sitzt eine Kappe 6, in deren Innerem der Stromabführungsdraht 4 mit der zentralen Ader eines Koaxialkabels 7 zur Verbindung mit einem (in der Zeichnung nicht dargestellten) Meßgerät verlötet ist. Der Innenraum der Kappe 6 ist mit einer Epoxidmasse 8 gefüllt.

Die ionenselektive Festphasenelektrode arbeitet auf folgende Weise. Beim Eintauchen der Elektrode in die zu analysierende Lösung findet ein Aufquellen der Oberflächenschicht der an die Lösung grenzenden Schicht der ionenempfindlichen Glasmembran 2 statt. Dabei erfolgt ein stöchiometrischer Ionenaustausch zwischen den in Lösung befindlichen Wasserstoffionen und den beweglichen Alkalimetallionen, die sich in der aufgequollenen Schicht der ionenempfindlichen Glasmembran 2 befinden, wodurch sich ein Elektrodenpotential einstellt, das mit der Aktivität der Wasserstoffionen in der zu analysierenden Lösung übereinstimmt und theoretisch durch die Nernstsche Formel festgelegt ist.

5

Bei der Elektrodensterilisation, die in der Behandlung mit überhitztem Wasserdampf bei einer Temperatur von bis 143 C° besteht, wird die aufgequollene Schicht der ionenempfindlichen Glasmembran 2 zerstört, wobei sie auch die Ionen der Seltenerdmetalle La und Nd einbüßt. Bei nochmaliger Verwendung der Elektrode findet nach der Sterilisation in der neu entstandenen aufgequollenen Schicht der ionenempfindlichen Glasmembran 2 die Wiederherstellung der Ionenkonzentration von La und Nd dank der Ionendiffusion aus der Masse der Membran 2 und des Festphasenkontaktes 3, wo diese Elemente enthalten sind, statt. Auf diese Weise übt die Sterilisation keinen Einfluß auf die Beständigkeit der ionenempfindlichen Glasmembran 2 gegen die Behandlung mit überhitztem Wasserdampf aus und führt also zu keiner Verschlechterung der Elektrodencharakteristiken, so daß die pH-Messung mit einer hohen Präzision ermöglicht wird.

Nachstehend sind konkrete Ausführungsbeispiele der ionenselektiven Festphasenelektrode mit verschiedener Zusammensetzung der Oxidbronzen angeführt.

Beispiel 1

Eine ionenselektive Festphasenelektrode wurde auf die im vorstehenden beschriebene Weise hergestellt. Als ionenempfindliche Glasmembran benutzte man die Zusammensetzung (1). Als Festphasenkontakt benutzte man eine Oxidbronze folgender Zusammensetzung: $Li_{0,26}$ • $La_{0,02}$ • $Nd_{0,04}$ • $WO_3$. Nach der Durchführung von 20 Sterilisationszyklen betrug die Potentialstabilität ±(2 bis 3) mV, die Wasserstoff-Kennliniensteilheit änderte sich nicht während dieser Zeit und betrug 58 + 1 mV/pH.

Beispiel 2

Eine ionenselektive Festphasenelektrode wurde ähnlich wie im Beispiel 1 hergestellt, aber als Festphasenkontakt benutzte man eine Oxidbronze folgender Zusammensetzung: $Na_{0,33}$ • $La_{0,02}$ • $Nd_{0,04}$ • $WO_3$. Nach der Durchführung von 30 Sterilisationszyklen betrug die Wasser stoff-Kennliniensteilheit 57± 1 mV/pH, die Potentialeinstellungszeit lag unter 1 min, die Potentialstabilität betrug ±(2 bis 3) mV.

Beispiel 3

Eine ionenselektive Festphasenelektrode wurde ähnlich wie im Beispiel 1 hergestellt, aber als Festphasenkontakt benutzte man eine Rubidiumoxidbronze folgender Zusammensetzung: $Rb_{0,25}$ • $La_{0,02}$ • $Nd_{0,01}$ • $WO_3$. Nach der Durchführung von 20 Sterilisationszyklen betrug die Potentialstabilität ±(2 bis 3) mV, die Wasserstoff-Kennliniensteilheit änderte sich nicht während dieser Zeit und betrug 58±1 mV/pH.

Beispiel 4.

Eine ionenselektive Festphasenelektrode wurde ähnlich wie im Beispiel 1 hergestellt, aber als Festphasenkontakt benutzte man eine Cäsiumoxidbronze folgender Zusammensetzung: $Cs_{0,33}$ • $La_{0,03}$ • $Nd_{0,03}$ • $WO_3$. Nach der Durchführung von 25 Sterilisationszyklen betrug die Wasserstoff-Kennliniensteilheit 57±2 mV/pH, die Potentialeinstellungszeit lag unter 2 min, die Potentialstabilität betrug ±(1 bis 3) mV.

Beispiel 5.

Eine ionenselektive Festphasenelektrode wurde ähnlich wie im Beispiel 1 hergestellt, aber als Festphasenkontakt benutzte man eine Calciumoxidbronze folgender Zusammensetzung: $Ca_{0,1}$ • $La_{0,02}$ • $Nd_{0,04}$ • $WO_3$. Nach der Durchführung von 22 Sterilisationszyklen betrug die Meßstabilität ±(2 bis 3) mV, die Wasserstoff-Kennliniensteilheit betrug 58±1 mV/pH, die Potentialeinstellungszeit machte 1 bis 2 min aus.

Beispiel 6.

Eine ionenselektive Festphasenelektrode wurde ähnlich wie im Beispiel 1 hergestellt, aber als Festphasenkontakt benutzte man eine Magnesiumoxidbronze folgender Zusammensetzung: $Mg_{0,25}$ • $La_{0,03}$ • $Nd_{0,02}$ • $WO_3$. Nach der Durchführung von 20 Sterilisationszyklen betrug die Meßstabilität ± (2 bis 3) mV, die Wasserstoff-Kennliniensteilheit betrug 58 ± 1 mV/pH, die Potentialeinstellungszeit machte 1 bis 2 min aus.

Beispiel 7

Eine ionenselektive Festphasenelektrode wurde ähnlich wie im Beispiel 1 hergestellt, aber als Festphasenkontakt benutzte man eine Bariumoxidbronze folgender Zusammensetzung: $Ba_{0,27}$ • $La_{0,05}$ • $Nd_{0,03}$ • $WO_3$. Nach der Durchführung von 20 Sterilisationszyklen betrug die Meßstabilität ± (2 bis 3) mV, die Wasserstoff-Kennliniensteilheit betrug 58±1 mV/pH, die Potentialeinstellungszeit machte 1 bis 2 min aus.

Beispiel 8.

Eine ionenselektive Festphasenelektrode wurde ähnlich wie im Beispiel 1 hergestellt, aber als Festphasenkontakt benutzte man eine Cadmiumoxidbronze folgender Zusammensetzung: $Cd_{0,13}$ • $La_{0,02}$ • $Nd_{0,03}$ • $WO_3$. Nach der Durchführung von 20 Sterilisationszyklen betrug die Meßstabilität ±(2 bis 3) mV, die Wasserstoff-Kennliniensteilheit betrug 58±1 mV/pH, die Potentialeinstellungszeit machte 1 bis 2 min aus.

Die Erfindung kann in der mikrobiologischen, chemischpharmazeutischen, in der Nahrungsmittelindustrie sowie im praktischen Gesundheitsschutz zur pH-Kontrolle von Kulturflüssigkeiten bei der Biosynthese und beim pH-Messen von zu sterilisierenden Medien unter Laborbedingungen bei analytischen Arbeiten effektiv angewendet werden.

## Ansprüche

1. Ionenselektive Festphasenelektrode, die ein Gehäuse in Form eines Rohres (1) aus einem dielektrischen Werkstoff enthält, an dessen einem Ende eine ionenempfindliche Glasmembran (2) befestigt ist, an deren dem Innerendes Rohres (1) zugewandten Oberfläche ein mit einem Stromabführungsdraht versehener Festphasenkontakt (3) angebracht ist, dadurch **gekennzeichnet**, daß die Glasmembran (2) in ihrer Zusammensetzung La und Nd als Zusätze enthält, und der Festphasenkontakt (3) aus einer Oxidverbindung der allgemeinen Formel $M_x$ $La_y$ $Nd_z$ $WO_3$ besteht, worin M ein Alkali-bzw. ein Erdalkalimetall bedeutet und wobei $0 < X + Y + Z < 1$ ist.

# INTERNATIONAL SEARCH REPORT

International Application No PCT/SU89/00098

## I. CLASSIFICATION OF SUBJECT MATTER (if several classification symbols apply, indicate all)

According to International Patent Classification (IPC) or to both National Classification and IPC

Int.Cl.5          G01N 27/36

## II. FIELDS SEARCHED

| Minimum Documentation Searched [7] | |
|---|---|
| Classification System | Classification Symbols |
| Int.Cl.5 | G01N 27/30, 27/36 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | US, A, 3713992 (TSUGIO AKAZAWA) 30 January 1973 (30.01.73) see the claims | 1 |
| A | US, A, 4028196 (OWENS-ILLINOIS, INC) 7 June 1977 (07.06.77) see the claims | 1 |
| A | US, A, 4140612 (MIKHAIL M. SHULTS et al) 20 February 1979 (20.02.79) see the claims | 1 |
| A | DE, C3, 2645623 (SCHULTS, MICHAJLOVITSCH et al) 14 August 1980 (14.08.80) see the claims | 1 |
| A | CH, A5, 612509 (M.M. SCHULTS et al) 31 July 1979 (31.07.79) see the claims | 1 |
| A | SU, A1, 834491 (INSTITUT ELEKTROKHIMII URALSKOGO NAUCHNOGO TSENTRA AN SSSR et al) 30 May 1981 (30.05.81) | 1 |
| A | SU, A1, 343211 (INSTITUT KHIMII URALSKOGO FILIALA AN SSSR 19 July 1972 (19.07.72) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 03 November 1989 (03.11.89) | 10 January 1990 (10.01.90) |
| International Searching Authority | Signature of Authorized Officer |
| ISA/SU | |

Form PCT/ISA/210 (second sheet) (January 1985)